# EUROPÄISCHE PATENTANMELDUNG

(11) **EP 3 738 723 A1**
(43) Veröffentlichungstag der Anmeldung: **18.11.2020**
(21) Anmeldenummer: 19178454.5
(22) Anmeldetag: 05.06.2019
(51) Int. Cl.: B25J 9/16

(54) **VERFAHREN, COMPUTER-PROGRAMM-PRODUKT UND ROBOTERSTEUERUNG ZUM KONTAKTBASIERTEN LOKALISIEREN VON BEI DER MANIPULATION DURCH ROBOTER BEWEGBAREN OBJEKTEN SOWIE ROBOTER**

(30) Priorität: 17.05.2019 EP 19175195
(71) Anmelder: Siemens Aktiengesellschaft, 80333 München (DE)
(72) Erfinder: Wirnshofer, Florian, 80335 München (DE); Schmitt, Philipp Sebastian, 81735 München (DE); Kast, Bernd, 89335 Ichenhausen (DE)

(57) **Zusammenfassung**

Um für ein Objekt (OBJ) bei der Manipulation durch mindestens einen Roboter (ROB) eine Objektlokalisierung unter Berücksichtigung des eingangs erwähnten Anforderungskatalogs auf der Basis eines probabilistischen Ansatzes ohne Objekterfassung durch visuelle Sensoren vornehmen zu können, wird es vorgeschlagen, das Objekt, das mit dem Roboter in einer Roboter-Objekt-Umgebung (ROU) ein System (SYS) zur Systemzustandsschätzung bildet, anhand einer mit dieser der Objektlokalisierung einhergehenden Schätzung, das Objekt lokalisierenden Wahrscheinlichkeitsverteilung zu lokalisieren, die mittels einer iterativ-rekursiven Anwendung eines Bayes-Filter-Algorithmus (BFA) approximativ ermittelt wird, wobei dazu in einem nicht-deterministischen Bewegungsmodell (BWM) zur Systemsimulation aus modellierten Übergängen von Zuständen des Systems gewonnene Zustandsübergangswahrscheinlichkeiten mit in einem Messmodell (MSM) zur Systemsimulation aus modellierten Plausibilitätsprüfungen der im Bewegungsmodell modellierten Systemzustandsübergänge gewonnenen Messungswahrscheinlichkeiten multiplikativ verknüpft werden und zu Beginn der Anwendung eine Initial-Wahrscheinlichkeitsverteilung benutzt wird. Hierzu sind in dem Bewegungsmodell ein die Physik des Systems in Bezug auf Kräfte und Dynamik und die hieraus resultierenden physikalischen Systemzusammenhänge vollständig inkludierender Physiksimulator (PHS) zur Systemzustandssimulation und ein den Physiksimulator bei rückgekoppeltem Simulationssystemzustand steuernder und die Nachgiebigkeit des Roboters gegenüber der Roboter-Objekt-Umgebung aufgrund von Stellgrößen (SGR) beeinflussender Regler (RGL, IPR) einbezogen und in dem Messmodell für die Plausibilitätsprüfungen Messergebnisse (MSE) von achsspezifischen Messungen berücksichtigt.

## Beschreibung

Die Erfindung bezieht sich auf Verfahren zum kontaktbasierten Lokalisieren von bei der Manipulation durch Roboter bewegbaren Objekten gemäß dem Oberbegriff des Patentanspruches 1, ein Computer-Programm-Produkt zum kontaktbasierten Lokalisieren von bei der Manipulation durch Roboter bewegbaren Objekten gemäß dem Oberbegriff des Patentanspruches 6 und eine Robotersteuerung Verfahren, Computer-Programm-Produkt und Robotersteuerung zum kontaktbasierten Lokalisieren von bei der Manipulation durch Roboter bewegbaren Objekten gemäß dem Oberbegriff des Patentanspruches 11.

Das Lokalisieren eines bei der Manipulation durch Roboter bewegbaren Objektes, z.B. ein Werkstück oder ein beliebiger anderer Gegenstand, ist ein für eine sichere Manipulation essenzieller Vorgang, bei dem das zu manipulierende, bewegbare Objekt, insbesondere wenn dieses sich nicht per Definition an einem Ort zur Handhabung befindet oder dorthin transportiert und geliefert werden kann - das Objekt also nicht greifbar für einen Roboter ist, erfasst und verfolgt wird, so z.B. mit robotereigenen Sensoren.

Der für die Objektmanipulation eingesetzte Roboter - deshalb häufig auch als Manipulator bezeichnet - ist entweder ein mit Greifarmen ausgestatteter Automat, der ferngesteuert, sensor- und programmierunterstützt mechanische Tätigkeiten als Menschersatz im industriellen Umfeld bewerkstelligt, oder ein Maschinenmensch oder beweglicher Automat, der Funktionen eines Menschen auf unterschiedlichen technischen Gebieten ausführt.

Ein zentrales Problem hierbei ist, dass zu Zeitpunkten, an denen die Präzision der Objekterkennung/Objektverfolgung am wichtigsten ist, die gängigen Lokalisierungsverfahren, z.B. durch eine Kamera, scheitern. Die präzise Objektpose ist insbesondere dann erforderlich, wenn die Maschine mit dem Objekt interagiert (z.B. Greifen, Ablegen, etc.) oder Objekte miteinander in Kontakt kommen (z.B. bei der Montage).

Ein bekannter Ansatz ist es, das Objekt einmal Kamera-basiert zu lokalisieren, während keine Verdeckungen bestehen, und den restlichen Manipulationsprozess "open loop"-mäßig auszuführen. Dieser Ansatz scheitert, wenn im verbleibenden Prozess Störungen die Objekt-Pose beeinflussen.

In der wissenschaftlichen Literatur gibt es mehrere Ansätze um Objekte kontaktbasiert zu lokalisieren. Siehe [1], [2], [3].

Keiner der bestehenden Ansätze deckt jedoch alle Anforderungen an einen Algorithmus zur Objekterkennung/Objektverfolgung ab. Diese Anforderungen sind:
- Beliebige Roboter-Kinematiken und beliebige Roboter- und Objekt-Geometrien müssen behandelt werden können.
- Es muss die vollständige Objekt-Pose inklusive Geschwindigkeit, also ein Objektzustand, bestimmt werden, gegebenenfalls auch für mehrere Objekte gleichzeitig. Unter der Pose eines Objektes wird insbesondere eine Position und/oder eine Orientierung dieses Objektes verstanden. Dies bedeutet, dass keine Annahmen getroffen werden, die die Anzahl der Dimensionen reduzieren.
- Es müssen multimodale Objekt-Verteilungen abgebildet werden können. Dies bedeutet, dass nicht von einer präzisen Initialschätzung ausgegangen werden kann.
- Das Verfahren muss in Echtzeit arbeiten.
- Es müssen bewegbare Objekte in einer Kontakt-Situation lokalisiert werden.

Hierbei sind Kamera-basierte Verfahren problematisch, da Roboter und Objekt sich gegenseitig verdecken.

Aus diesem Grund wäre es sehr hilfreich ein Kontakt-basiertes Erkennungssystem zu haben, das basierend auf Messungen von Roboter-Konfiguration (z.B. Achsposition/Achsgeschwindigkeit) und gemessenen Interaktionskräften die Objekt-Pose bestimmt.

Die der Erfindung zugrundeliegende Aufgabe besteht darin, ein Verfahren, Computer-Programm-Produkt und eine Robotersteuerung zum kontaktbasierten Lokalisieren von bei der Manipulation durch Roboter bewegbaren Objekten anzugeben, bei dem bzw. bei der die Objektlokalisierung unter Berücksichtigung des vorstehenden Anforderungskatalogs auf der Basis eines probabilistischen Ansatzes ohne Objekterfassung durch visuelle Sensoren, wie z.B. eine Kamera, vorgenommen wird.

Diese Aufgabe wird ausgehend von dem im Oberbegriff des Patentanspruches 1 definierten Verfahren durch die im Kennzeichen des Patentanspruches 1 angegebenen Verfahrensmerkmale gelöst.

Außerdem wird die Aufgabe ausgehend von dem im Oberbegriff des Patentanspruches 6 definierten Computer-Programm-Produkt durch die im Kennzeichen des Patentanspruches 6 angegebenen Computer-Programm-Produkt-Merkmale gelöst.

Darüber hinaus wird die Aufgabe ausgehend von der im Oberbegriff des Patentanspruches 11 definierten Robotersteuerung durch die im Kennzeichen des Patentanspruches 11 angegebenen Roboter-Merkmale gelöst.

Die der Erfindung zugrundeliegende Idee gemäß der in den Ansprüchen 1, 6 und 11 jeweils angegebenen technischen Lehre besteht darin, ein bei der Manipulation durch mindestens einen stellgrößengeregelten Roboter bewegbares Objekt, das mit dem Roboter in einer Roboter-Objekt-Umgebung ein System zur Systemzustandsschätzung bildet, zu lokalisieren, wobei für die mit der Objektlokalisierung einhergehende Systemzustandsschätzung eine das Objekt lokalisierende Wahrscheinlichkeitsverteilung mittels einer iterativ-rekursiven Anwendung eines Bayes-Filter-Algorithmus approximativ ermittelt wird und dabei in einem nicht-deterministischen Bewegungsmodell zur Systemsimulation aus modellierten Übergängen von Zuständen des Systems gewonnene Zustandsübergangswahrscheinlichkeiten mit in einem Messmodell zur Systemsimulation aus modellierten Plausibilitätsprüfungen der im Bewegungsmodell modellierten Systemzustandsübergänge gewonnenen Messungswahrscheinlichkeiten multiplikativ verknüpft werden und zu Beginn der iterativ-rekursiven Anwendung eine Initial-Wahrscheinlichkeitsverteilung benutzt wird. Hierzu sind in dem Bewegungsmodell ein die Physik des Systems in Bezug auf Kräfte und Dynamik und die hieraus resultierenden physikalischen Zusammenhänge der Systemkomponenten vollständig inkludierender Physiksimulator zur Systemzustandssimulation und ein den Physiksimulator bei rückgekoppeltem Simulationssystemzustand steuernder und die Nachgiebigkeit des Roboters gegenüber der Roboter-Objekt-Umgebung aufgrund einer Stellgröße bewerkstelligender oder verwirklichender Regler einbezogen und in dem Messmodell für die Plausibilitätsprüfungen Messergebnisse von achsspezifischen Messungen berücksichtigt.

Die wesentlichen Aspekte des probabilistischen Ansatzes, sind dabei die Variablen einer Wahrscheinlichkeitsverteilung, das Bewegungsmodel und das Messmodel, wobei jede Hypothese über den Systemzustand (Partikel) sowohl die Objekt-Pose und die Objekt-Geschwindigkeit als auch die Roboter-Pose und - Geschwindigkeit beinhaltet.

Vorteilhaft ist dabei insbesondere, dass ein oder mehrere Objekte, z.B. Werkstücke, bei beliebiger Geometrie, mit beliebigen Robotern/Automaten und aus einer beliebigen Ausgangssituation in Echtzeit lokalisiert werden.

Dabei ist es für eine Weiterbildung der Erfindung gemäß den Ansprüchen 2 und 7 von Vorteil, für die Approximation des Bayes-Filter-Algorithmus bei der iterativ-rekursiven Ermittlung der Wahrscheinlichkeitsverteilung ein zu benutzen.

Um die Nachgiebigkeit des Roboters gegenüber der Roboter-Objekt-Umgebung bewerkstelligen, verwirklichen oder schaffen zu können, wird die Stellgröße gemäß den Ansprüchen 3 und 8 in vorteilhafter Weise aus einer Sollposition, Sollgeschwindigkeit, und/oder einer Sollbeschleunigung gebildet.

Um diese Nachgiebigkeit zu erreichen, ist es aber auch möglich, dass der Regler gemäß den Ansprüchen 4 und 9 in vorteilhafter Weise als Impedanz-Regler betrieben wird, bei dem eine Impedanz-Regelung zur nachgiebigen Regelung des Reglers benutzt wird.

Die für die Plausibilitätsprüfungen in dem Messmodell an dem Roboter vorgenommen achsspezifischen Messungen betreffen vorzugsweise die Achskinematik, wonach gemäß den Ansprüchen 5 und 10 bevorzugt zumindest eine achskinematische Größe aus Achsposition, Achsgeschwindigkeit, Achsbeschleunigung und Achsmoment gemessen und das daraus jeweils erzielte Messergebnis benutzt wird.

Weitere Vorteile der Erfindung ergeben sich aus der nachfolgenden Beschreibung eines Ausführungsbeispiels der Erfindung anhand einer einzigen FIGUR und der Referenz ("cited by reference") auf die nachveröffentlichten Nichtpatentliteratur von F. Wirnshofer et al. "State Estimation in Contact-Rich Manipulation"; IEEE International Conference on Robotics and Automation (ICRA), May 20-24, 2019 in Montreal - - im Folgenden mit *"Wirnshofer et al."* bezeichnet.

Die FIGUR zeigt eine Robotersteuerung RST zum kontaktbasierten Lokalisieren eines bei der Manipulation durch einen stellgrößengeregelten Roboter ROB bewegbaren Objektes OBJ. Die FIGUR zeigt nur einen Roboter.

Es ist aber im Rahmen eines weiteren Ausführungsbeispiels denkbar, dass mehrere Roboter das bewegbare Objekt oder mehrere bewegbare Objekte manipulieren möchten [vgl. *Wirnshofer* et *al.;* (Fig. 1), (Fig. 2), (Fig. 6 - Cube-2)].

Die Manipulation des Objektes OBJ durch den Roboter ROB passiert in Roboter-Objekt-Umgebung ROU. Gemäß den Ausführungen bei *Wirnshofer et al.* ist diese Roboter-Objekt-Umgebung ROU z.B. eine Tischplatte mit einem Kasten auf dem sich das Objekt, z.B. ein Würfel befindet [vgl. *Wirnshofer et al.;* (Fig. 4), (Fig. 6 - Cube-Box)].

Der Roboter ROB ist z.B. gemäß *Wirnshofer et al.* ein mit Greifarmen ausgestatteter Automat, der ferngesteuert, sensor- und programmierunterstützt mechanische Tätigkeiten als Menschersatz im industriellen Umfeld bewerkstelligt.

Es versteht sich von selbst, dass auch jede andere beliebige Roboter-Objekt-Umgebung ROU für das kontaktbasierte Lokalisieren eines bei der Manipulation durch einen Roboter bewegbaren Objektes in Frage kommen kann.

Der Roboter ROB, das bewegbare Objektes OBJ und die Roboter-Objekt-Umgebung ROU bilden nach der FIGUR ein System SYS, wobei der Roboter ROB, das bewegbare Objektes OBJ und die Roboter-Objekt-Umgebung ROU Systemkomponenten sind. Dieses System SYS ist ein "reales System", was in verschiedenen technischen Domänen, z.B. mit der geschilderten Roboter-Ausprägung in der Industrieautomatisierung, so existieren oder vorliegen kann. Im Unterschied oder Gegensatz dazu ist in der Robotersteuerung RST eine Simulation dieses Systems SYS nachgebildet und es findet auf der Basis dieser Simulation mit bekannten Algorithmen eine auf einem probabilistischen Ansatz beruhende Zustandsschätzung des Systems SYS statt. Bei dieser Simulation geht der zu schätzende Systemzustand einher mit der Objektlokalisierung in dem realen System SYS und es kann deshalb eine Aussage über den möglichen Aufenthaltsort des Objektes getroffen werden.

Die Robotersteuerung RST enthält ein Computer-Programm-Produkt CPP zum kontaktbasierten Lokalisieren des bei der Manipulation durch den Roboter ROB bewegbaren Objektes OBJ und kann z.B. - wie in der FIGUR mit dem strich-punktierten "Lasso" dargestellt - als eigenständig ausgebildete und auf dem Markt separat vertriebene Einheit Bestandteil des Roboters ROB sein. Dabei können Robotersteuerung und Roboter, aber sie müssen nicht, vom selben Hersteller sein.

Das Computer-Programm-Produkt CPP enthält einem nicht-flüchtigen, lesbaren Speicher SP, in dem prozessorlesbare Steuerprogrammbefehle eines die Objektlokalisierung durchführenden Programm-Moduls PGM gespeichert sind, und ein mit dem Speicher SP verbundener Prozessor PZ, der die Steuerprogrammbefehle des Programm-Moduls PGM zur Objektlokalisierung ausführt.

In Analogie zu der vorstehende Roboter-Robotersteuerung-Betrachtung kann jetzt bei einer Robotersteuerung-"Computer-Programm-Produkt"-Betrachtung das Computer-Programm-Produkt CPP bzw. präziser das die Objektlokalisierung durchführende Programm-Modul PGM, das jeweils vorzugsweise als APP ausgestaltet, beschaffen oder ausgebildet ist oder aber Bestandteil einer Programmierumgebung oder eines "Application Programming Interface <API>" für die Robotersteuerung darstellt, ebenfalls eigenständig und unabhängig von der Robotersteuerung als separates Produkt eines Herstellers A auf dem Markt vertrieben und dann in einer beliebigen Robotersteuerung eines Herstellers B eingesetzt werden.

Das Programm-Modul PGM setzt sich aus drei Teilmodulen zusammen, die für die Systemzustandsschätzung bzw. bei der Objektlokalisierung funktional zusammenwirken.

In einem ersten Teilmodul TM1 sind ein Bayes-Filter-Algorithmus BFA und ein Approximationsalgorithmus APA enthalten sowie programmier- und softwaretechnisch umgesetzt, wobei beide Algorithmen, was die eingezeichnete Pfeilrichtung anbetrifft, entsprechend funktional zusammenwirken.

Das zweite Teilmodul TM2 umfasst ein Messmodell MSM, das mit dem ersten Teilmodul TM1 in der dargestellten Weise, was die eingezeichnete Pfeilrichtung anbetrifft, wieder entsprechend funktional zusammenwirkt.

In Bezug auf das funktionale Zusammenwirken mit dem ersten Teilmodul TM1 trifft das Gleiche auf ein drittes Teilmodul TM3 zu. Dieses dritte Teilmodul TM3 umfasst ein Bewegungsmodell BWM, das mit in der dargestellten Weise, was die eingezeichnete Pfeilrichtung anbetrifft, auch entsprechend funktional zusammenwirkt. In dieses Bewegungsmodell BWM sind ein die Physik des Systems SYS in Bezug auf Kräfte und Dynamik und die hieraus resultierenden physikalischen Zusammenhänge der Systemkomponenten vollständig inkludierender Physiksimulator PHS zur Systemzustandssimulation und ein den Physiksimulator bei rückgekoppeltem Simulationssystemzustand steuernder Regler RGL programmier- und softwaretechnisch realisiert oder umgesetzt. Beide Komponenten, der Physiksimulator und der Regler RGL, bilden ein deterministisches Simulationssystem SSY. Das Bewegungsmodell BWM ist demzufolge auch deterministisch. Wird jedoch der Physiksimulator PHS des Simulationssystems SSY mit einer zufälligen Kraft und/oder Dynamik beaufschlagt, so ist dieser in seinem Verhalten verrauscht. Infolge dieses Verrauschens werden sowohl das Simulationssystem SSY als auch das Bewegungsmodell BWM nicht-deterministisch. Hierzu wird später im Zuge der weiteren technischen Betrachtung der Erfindung näher drauf eingegangen.

Für die funktionale Steuerung des Physiksimulators PHS wird der Regler RGL mit einer Stellgröße beaufschlagt, die, um den Regler RGL Impedanz-geregelt, als Impedanz-Regler IPR, betreiben zu können, entweder eine Sollposition, eine Sollgeschwindigkeit oder eine Sollbeschleunigung sein kann. Durch die Art der Beaufschlagung des Reglers RGL mit der Stellgröße und des damit verbundenen Betriebs des Reglers als Impedanz-Regler verhält sich der Roboter bei der Systemzustandssimulation nachgiebig gegenüber der Roboter-Objekt-Umgebung ROU. Auch auf diesen Aspekt wird später im Zuge der weiteren technischen Betrachtung der Erfindung näher drauf eingegangen.

Der Prozessor PZ in dem Computer-Programm-Produkt CPP ermittelt jetzt mit der Ausführung der Steuerprogrammbefehle des Programm-Moduls PGM zur Objektlokalisierung für den mit der Objektlokalisierung einhergehenden Zustand des durch die genannten Systemkomponenten gebildeten Systems SYS im Zuge der bereits erwähnten Systemzustandsschätzung eine das Objekt OBJ lokalisierende Wahrscheinlichkeitsverteilung. Diese Ermittlung erfolgt mittels der iterativ-rekursiven Anwendung des in dem Programm Modul PGM enthaltenen und umgesetzten Bayes-Filter-Algorithmus BFA ermittelt. Dieser stellt im Prinzip einen Bayes-Filter dar, der bei einer iterativ-rekursiven Anwendung die besagte Wahrscheinlichkeitsverteilung liefert.

Bei dieser iterativ-rekursive Anwendung des Algorithmus zur Ermittlung der Wahrscheinlichkeitsverteilung werden gemäß dem Bewegungsmodell BWM zur Systemsimulation unter der Voraussetzung, dass dieses nicht-deterministisch ist, aus modellierten Übergängen von Zuständen des Systems gewonnene Zustandsübergangswahrscheinlichkeiten und gemäß dem Messmodell MSM zur Systemsimulation aus modellierten Plausibilitätsprüfungen der gemäß dem Bewegungsmodell BWM modellierten Systemzustandsübergänge gewonnene Messungswahrscheinlichkeiten multiplikativ verknüpft.

Gemäß dem Messmodell MSM werden für die Plausibilitätsprüfungen bei der iterativ-rekursive Anwendung des Algorithmus zur Ermittlung der Wahrscheinlichkeitsverteilung an dem Roboter ROB achsspezifische, z.B. die Achskinematik betreffende, Messungen vorgenommenen und daraus resultierenden Messergebnisse MSE in dem Messmodell MSM berücksichtigt. Die Messergebnisse MSE für die Plausibilitätsprüfungen sind vorzugsweise Ergebnisse aus Messungen von Achsposition, Achsgeschwindigkeit, Achsbeschleunigung und/oder Achsmoment des Roboters ROB. Die Messung und die Berücksichtigung der Messergebnisse ist in der FIGUR durch den gestrichelten Wirkungspfeil von dem Roboter ROB, über den Prozessor PZ bis hin zum Messmodell MSM prinzipiell dargestellt. Die eigentliche Berücksichtigung erfolgt aber in dem Prozessor PZ bei der Ausführung der Steuerprogrammbefehle des Programm-Moduls PGM und zwar im Zuge der Ermittlung der Wahrscheinlichkeitsverteilung.

Bei der iterativ-rekursive Anwendung des Algorithmus zur Ermittlung der Wahrscheinlichkeitsverteilung werden weiterhin am Anfang eine Initial-Wahrscheinlichkeitsverteilung und aufgrund der Komplexität der Systemzustandsschätzung [vgl. hierzu die Ausführungen im Zuge der weiteren technischen Betrachtung der Erfindung und bei *Wirnshofer et al*.] der Approximationsalgorithmus APA benutzt. Als Approximationsalgorithmus APA wird vorzugsweise ein bekannter Partikelfilteralgorithmus PFA, der in seiner Umsetzung einen Partikelfilter darstellt [4] .

Wie die vorstehend skizzierte Ermittlung der Wahrscheinlichkeitsverteilung im Detail realisiert ist und welche technischen Aspekte dabei zu berücksichtigen sind, wird mit den Ausführungen im Zuge der weiteren technischen Betrachtung der Erfindung und derjenigen bei *Wirnshofer et al.* erläutert.

Eine weitergehende technische Betrachtung der Erfindung im Rahmen des vorstehend beschriebenen Ausführungsbeispiels basiert auf der nachveröffentlichten Nichtpatentliteratur von F. Wirnshofer et al. "State Estimation in Contact-Rich Manipulation"; IEEE International Conference on Robotics and Automation (ICRA), May 20-24, 2019 in Montreal, die aufgrund von nachfolgenden Bezugnahmen im Zusammenhang mit dieser Betrachtung und im Kontext der in der vorliegenden Patentanmeldung offenbarten technischen Lehre explizit als zusätzliche, erfindungsrelevante Offenbarung anzusehen ist.

Um bei der Manipulation durch Roboter bewegbare Objekte kontaktbasiert lokalisieren zu können, wird gemäß dem Ausführungsbeispiel ein probabilistischer Ansatz verfolgt.

Damit die Position, Geschwindigkeit oder ganz allgemein der Zustand eines bewegbaren Objektes und dessen Manipulation durch einen Roboter geschätzt werden kann, hat man für die Schätzung im Prinzip Zugriff auf zwei Dinge. Dies gilt nicht nur für den vorliegenden Schätzungskomplex, sondern es gilt ganz allgemein für Schätzungen jeglicher Art.

Für den die Erfindung betreffenden Schätzungskomplex hat man einerseits ein Modell darüber, wie ein System, bestehend aus mindestens einem Roboter oder Manipulator (Roboter zur Objekt-Manipulation) und mindestens ein im Raum bewegbares Objekt sich physikalisch verhält und man hat andererseits systembezogene Messungen.

Liegt ein Objekt auf einer Tischplatte etc., dann weiß man, dass es statisch ist. Man nimmt jetzt einen Raum mit zulässigen Schätzungen an und man hat die systembezogenen Messungen, die z.B. durch eine Kamera oder durch Sensoren an Achspositionen des Roboters passieren.

Gemäß dem Ausführungsbeispiel werden ausschließlich Positionssensoren an den Achsen des Manipulators bzw. Roboters betrachtet und natürlich das Modellwissen über das System berücksichtigt. Die kamerabasierte Lokalisierung des Objektes ist - wie eingangs bereits erwähnt - nicht Gegenstand der vorliegenden Betrachtung.

Ein typisches Modellwissen, das man hat, ist:
Man kennt die Geometrie des Roboters. Man kennt die Geometrie von den Einzelteilen des Systems (mindestens ein Roboter, mindestens ein Objekt und die Tischplatte) und man weiß, dass sich die diese Teile nicht gegenseitig durchdringen. Das ist ein Modellwissen, das man verwenden könnte. Diese Art von Modellwissen wird jedoch hier nicht direkt genutzt. Es wird also nicht angenommen die Teile durchdringen sich nicht. Stattdessen wird eine Physiksimulation durchgeführt, die ein sehr detailliertes physikalisches Modell des Systems ist. Und in dem Physiksimulator wird automatisch keine Durchdringung stattfinden, weil der Physiksimulator es verhindert, dass sich Systemteile gegenseitig durchdringen.

Die Physik/Mathematik hinter dem Physiksimulator ist bei *Wirnshofer et al.* in Kapitel III; A) "Rigid Body Motion and Contact Dynamics" erläutert. Die dort erläuterten physikalischen Grundlagen werden in diesen Physiksimulator gepackt bzw. sind entsprechender Bestandteil desjenigen und des physikalischen Systemmodells.

Um den Zustand des Objektes zu schätzen, wird nun nicht, wie beim Stand der Technik, eine Untermenge (subset) der gesamten Zustände betrachtet - es wird also nicht gesagt, es wird das Objekt auf der Tischplatte festgenagelt und man hat dann nur eine Z-Komponente oder es wird etwas anderes mit vergleichbarer Auswirkung gemacht oder es werden Geschwindigkeiten ignoriert - nein, es der volle Systemzustand von allen Positionen und Rotationen vom Objekt plus deren Geschwindigkeiten, plus alle Zustände des Roboters bzw. Manipulators mit in ein großes, komplexes Schätzungsproblem genommen. D.h. es wird erst einmal angenommen, die Achsenlagen des Roboters gar nicht zu kennen, das ist keine plausible Annahme, weil man für den Roboter weiß, wo dieser sich befindet und man weiß wie schnell er sich bewegt. Es werden also alle diese Größen mit in das große, komplexe Schätzproblem genommen, was auf den ersten Blick keine gute Idee ist, weil es den Zustandsraum massiv vergrößert und auf den ersten Blick das Schätzproblem unlösbar macht.

Darüber hinaus wird ein zweiter Schritt, der wieder auf den ersten Blick abermals nicht nach einer guten Idee aussieht. Es wird nämlich die komplette Dynamik des Systems betrachtet. Das heißt, es wird darauf geschaut, wie verhält sich das Achsmoment von der Achse auf die Gesamtbeschleunigung des gesamten Systems inklusive Schwerkraft, Kontaktkräften und Reibung, wodurch das physikalische Systemmodell weiter in seiner Komplexität steigt. Liegt nun dieses sehr komplexe Systemmodell vor, wird eine zusätzliche Annahme gemacht und zwar dass der Roboter bzw. Manipulator die ganze Zeit in einer stabilen Regelung betrieben wird. Es wird also bei der physikalischen Simulation ein Regler (Controller) berücksichtigt. Mit anderen Worten der Physiksimulator wird mit einer stabilen Regelung beaufschlagt. Das physikalisches Systemmodell mit dem Physiksimulator wird um ein Regler-Modell mit dem Regler erweitert.

Die Regler ist bei *Wirnshofer et al.* in Kapitel III; B) "Compliant Interaction and Controller Model" erläutert. Er bewirkt eine stabile Regelung und das betreffende Regler-Modell wird wie das physikalischen Systemmodell dem Schätzproblem zugrunde gelegt.

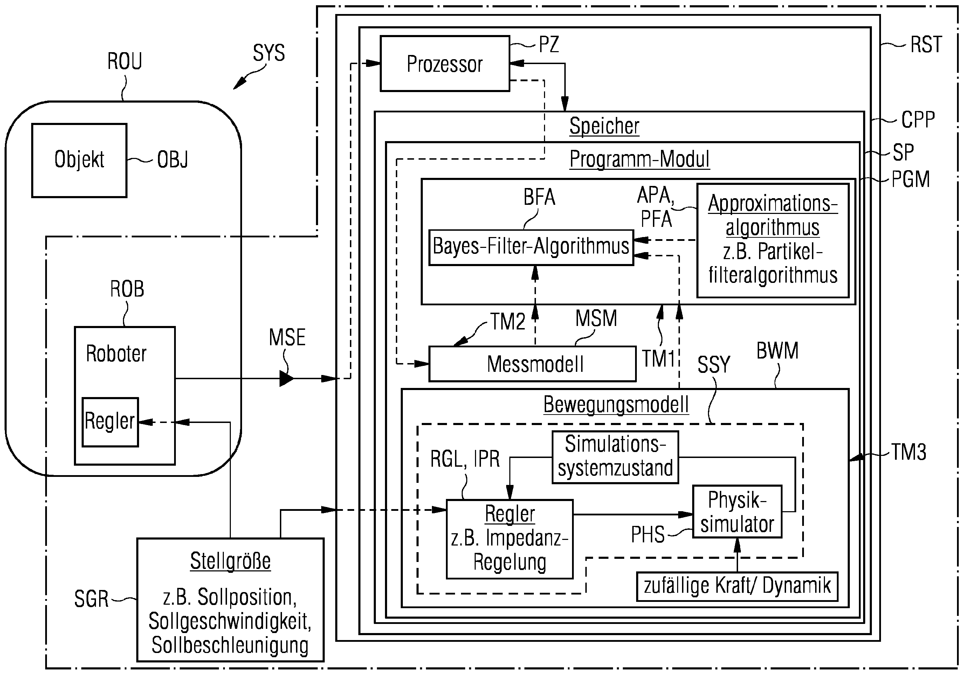

Dieses dem Schätzproblem zugrundeliegende Systemmodell aus physikalischem Systemmodell und Regler-Modell hat den Vorteil, dass es sich zumindest was den Roboter angeht, selbst stabilisiert, das heißt, wenn gerade keine Kontaktkräfte auftreten, wird der Roboter immer in seine Sollposition fahren und wenn man das Ganze dann hinterher als probabilistisches Modell auffasst, schwingt sich die gesamte Wahrscheinlichkeitsmasse, was den Roboter angeht, auf diesen stabilen Punkt ein. Der Roboter driftet nicht durch die Gegend. Mit anderen Worten, obwohl alle Zustände vom Roboter mitberücksichtigt worden sind, sowohl die Positionen als auch die Geschwindigkeiten - das können gemäß der Lehre von *Wirnshofer et al.* in den bildlichen Darstellungen (Fig. 1 und Fig. 2) sehr viele werden, so sind es z.B. in dem dargestellten Fall, wo zwei Roboter mit 14 Achsen betrachten werden, insgesamt 28 Zustände mit 14 Positionen und 14 Geschwindigkeiten - verschwinden diese Zustände alle hinter einem Schätzproblem, weil sie sich alle einschwingen und de facto nicht da sind, denn sie sind alle auf dem gleichen Wert.

Jenseits des Roboters gibt es natürlich bei dieser Betrachtung der stabilen Regelung noch zusätzlich sechs Freiheitsgrade pro Objekt, also drei Positionen und drei Orientierungen und genauso viele Geschwindigkeiten. Die kondensieren sich im Endeffekt auf drei verbleibende Freiheitsgrade pro Objekt ein. Das Objekt fällt einfach runter, es bleibt liegen und die Geschwindigkeiten verschwinden. Das ist das Ergebnis des Physikalischen Modells, dass das Objekt typischerweise auf eine Seite fällt. Von den sechs Freiheitsgraden gehen zwei rotatorische Freiheitsgrade und ein translatorischer Freiheitsgrad verloren und es bleiben im Endeffekt nur noch drei Freiheitsgrade des Objekts übrig.

Fazit: Obwohl alle Größen mit in das große, komplexe Schätzungsproblem mit hineingenommen worden sind, kondensiert sich das alles auf drei übrig gebliebenen Größen des Objekts hinterher zusammen.

Es gibt jetzt also bei dem Systemmodell (Kombination aus physikalischem Systemmodell und Regler-Modell), wie vorstehend bei *Wirnshofer et al.* in dem Kapitel III; A) bzw. in dem Kapitel III; B) skizziert. Diese beiden Modelle bilden nun Eingangsgrößen für das Schätzproblem. Als weitere quasi vierte Eingangsgröße (denn als dritte Eingangsgröße sind wie weiter unten erläutert wird Messungen bzw. ein Messmodell vorgesehen) sind Sollposition [vgl. q^{d}ᵣ *bei Wirnshofer et al.* in der bildlichen Darstellung (Fig. 3)] und Sollgeschwindigkeit [vgl. *q̇*^{d}ᵣ *bei Wirnshofer et al.* in der bildlichen Darstellung (Fig. 3)] von dem Roboter bekannt, weil man weiß, wo der Roboter hinfahren soll. Beide Größen könnte man entweder als Teil von dem Regler auffassen oder aber auch explizit als Eingangsgröße betrachten. Wie es betrachtet nun wird, ist egal, man kann es sich aussuchen. Dadurch ist im Prinzip jetzt das Systemmodell für das Schätzproblem charakterisiert.

Bei *Wirnshofer et al.* in der bildlichen Darstellung (Fig. 3) sind das Physikalische Modell in dem Block "Forward Dynamics" und das Regler-Modell in dem Block "Controller" enthalten. Der Block "Forward Dynamics" wird deshalb als "Forward Dynamics" bezeichnet, weil er den aktuellen Bewegungsstand des Systems darstellt beschreibt, also die Position und Geschwindigkeiten aller beteiligten Komponenten, sowohl Manipulator als auch Objekt plus das Drehmoment, das an den Achsen des Manipulators angewandt wird. Diese drei Dinge in Kombination bestimmen, wie sich der Manipulator und das Objekt beschleunigen. Der Ausdruck "Forward Dynamics" ist deswegen gewählt, weil dadurch die Entwicklung des Systems nach vorne beschrieben wird. Diesen Block "Forward Dynamics" würde man als den Physiksimulator implementieren und man kann in der besagten bildlichen Darstellung (Fig. 3) bei *Wirnshofer et al.* am Stück die Modelle quasi sehen, die als Eingangsgröße für das Schätzproblem herangezogen werden.

Das sind einmal der Physiksimulator bzw. das physikalische Systemmodell und der Regler bzw. das Regler-Modell entweder mit der einbezogenen Sollposition und Sollgeschwindigkeit oder aber ohne die einbezogene Sollposition und Sollgeschwindigkeit. Als dritte Eingangsgröße werden für das Schätzproblem dann noch die bereits angesprochenen Messungen benötigt. Die Messungen, die im Rahmen eines Messmodells verwendet werden, sind Messungen über die Achspositionen am Roboter, die typischerweise messbar sind, weil es bekannt ist, wie weit die Achse gedreht ist.

Mit dem Systemmodell (physikalischen Systemmodell und Regler-Modell) und dem Messmodell liegen jetzt die Eingangsgrößen vor, die für das Schätzproblem herangezogen werden. Mit diesen Eingangsgrößen wird jetzt ein probabilistischer Ansatz verfolgt und ein Zustandsschätzungsproblem, bei dem ein Zustand des Systems geschätzt und als "belief" bezeichnet wird, modelliert. Dieser Ansatz führt zu einem Bewegungsmodell, das bei *Wirnshofer et al.* in Kapitel III; C) "Sequential Bayesian Estimation" skizziert wird, und dem bereits erwähnten Messmodell.

Ein weiterer Punkt im Zuge dieses Ansatzes ist es, ein Bayes-Filter oder exakter einen Bayes-Filter-Algorithmus zu verwenden, um den "belief" zu berechnen. Der Algorithmus ist rekursiv - in Bezug auf Zeitpunkten mit "ₜ" als Index - und ergibt sich aus den folgenden Größen, einem initialen (alten) "belief", einer Stellgröße (bei *Wirnshofer et al.* in Kapitel III; C) mit "*uₜ*" bezeichnet) und einer aktuellen Messung.

Für konkrete Implementierungen des Bayes-Filter-Algorithmus werden neben dem initialen "belief" zwei zusätzliche Wahrscheinlichkeitsverteilungen benötigt:
1. Eine Zustandsübergangswahrscheinlichkeit, die die Übergangswahrscheinlichkeit von einem aktuellen Zustand auf einen Folgezustand angibt und
2. eine Wahrscheinlichkeit aus einem bestimmten Zustand eine bestimmte Messung zu bekommen, die das Messmodell liefert.

Um den Bayes-Filter-Algorithmus implementieren zu können, wird weiterhin eine verrauschte Dynamik des Systems - von einem Zustand, den man nicht kennt - angenommen und es wird zusätzlich noch angenommen, dass man aus diesem Zustand eine verrauschte Messung bekommen wird. Mit diesen beiden Komponenten (Annahmen) kann man dann unter Verwendung einer geeigneten Approximation den Bayes-Filter zur Zustandsschätzung verwenden.

Wie sieht nun diese Zustandsschätzungsmodell aus. Man hat einmal das Bewegungsmodell, das die Zustandsübergangswahrscheinlichkeit liefert und man hat das Messmodell, das die Wahrscheinlichkeitsverteilung zwischen Zustand und Messgrößen liefert.

### Was beinhaltet das Messmodell?

Angenommen, wenn die Roboterachsen an einer bestimmten aktuellen Position sind, so z.B. um ein Winkelmaß von 100° gegenüber der vorherigen Position gedreht, dann erhält man bei der Messung einfach eine Gauß-Verteilung von Messwerten, wobei der Mittelwert diese 100°-Winkelposition hat.

Das Bewegungsmodell beschreibt die Übergangswahrscheinlichkeit von einem aktuellen Zustand bei der gegebenen Stellgröße (Input des Controllers; *vgl. Fig.3 bei Wirnshofer et al*.) auf einen Folgezustand {*vgl. Wirnshofer et al. in Kapitel III; C)}.* In Bezug auf den aktuellen Zustand sind die Positionen und Geschwindigkeiten aller beteiligten Komponenten (Roboter und Objekt) in dem System und als Stellgröße (dies sind die Inputs des Controllers; im Folgenden als Control-Inputs bezeichnet) sind die Sollposition [vgl. q^{d}ᵣ *bei Wirnshofer et al.* in der bildlichen Darstellung (Fig. 3)] und die Sollgeschwindigkeit [vgl. *q̇*^{d}ᵣ *bei Wirnshofer et al.* in der bildlichen Darstellung (Fig. 3)], die die Sollgrößen für den Regler darstellen, bekannt.

Diese Control-Inputs - was sehr wichtig ist - sind für das eigentliche, durch das Systemmodell charakterisierte Physikalische System im Prinzip nur stellvertretend, man spricht deshalb auch von Proxy-Inputs. Die eigentlichen unmittelbaren Inputs wären Drehmomente, denn der Roboter wird ja über diese Drehmomente gesteuert.

Da man dem Physikalische System ja nicht einfach sagen kann, teleportier dich zu einem beliebigen Ort hin, sondern stattdessen nur die Beschleunigung als Stellgröße beeinflusst werden kann, stellen die genannten Sollgrößen (Sollposition und Sollgeschwindigkeit) - sozusagen als Abstraktion - die eigentlichen Inputs dar. Dies hat den Vorteil, dass der Regler in das Systemmodell mit einbezogen werden kann, wodurch der Roboter letztendlich, wie vorstehend bereits erwähnt, stabilisiert wird.

Würde man stattdessen die Drehmomente als die Inputs von dem System betrachten, hätte man im Prinzip einen Doppelintegrator. Effektiv sind es aber Beschleunigungen, die man steuern kann. Durch die Funktion des Doppelintegrator werden Fehler integriert und der Roboter driftet irgendwo durch die Gegend. Das heißt, wenn man einen siebenachsigen Roboter schätzen will, wo der sich gerade befindet, und man hat nur die Drehmomente als Input, dann driftet dieser durch einen siebendimensionalen Zustandsraum und es gibt keine realistische Chance, mit irgendeinem externen Computer abzuschätzen, wo der Roboter sich gerade aufhält.

Fließen aber - im Gegensatz dazu - die mittelbaren Control-Inputs in das Modell ein, dann weiß man, dass der Regler den Roboter stabilisiert und der siebendimensionale Raum effektiv, solange keine Kontakte auftreten, auf einen nulldimensionalen Punkt zusammenfällt, weil der Roboter einfach stabil bleibt. Der Roboter fährt also dorthin, wo er hinfahren soll.

Den Unterschied zwischen dem Drehmoment als Stellgröße sowie der Sollposition und der Sollgeschwindigkeit als Stellgröße lässt sich sehr gut am Beispiel eines "Impedanz-Reglers auf Achsebene" betrachten und aufzeigen. Es handelt sich um ein Gedankenmodell. Gemäß diesem Gedankenmodell würde der Impedanz-Regler eine künstliche Feder simulieren. Angenommen der Roboter hat einen Sollpositionswert, wo er sich hinbewegen soll. Diese Sollposition ist durch eine Tischplatte gegeben. Der Roboter bewegt den Manipulator (Greifer) über seine Arme in Richtung der Tischplatte. Kommt es zum Kontakt mit dieser, spürt der Roboter eine Gegenkraft. Aufgrund des Impedanz-Reglers würde der Roboter den Arm stabil halten und an der Kontaktposition verharren. Würde nun weiter die Tischplatte versuchen wollen, den Greifer des Roboters aktiv, über die Gegenkraft hinaus wegzudrücken - was physikalisch betrachtet unrealistisch ist - dann würde der Roboter wie eine rotatorische Feder gegen eine Auslenkung arbeiten und es zulassen, dass versucht wird, ihn wegzudrücken. Der Roboter würde, weil es keine Integralanteile im Impedanz-Regler gibt, eben nicht erzwingen, dass er wieder zu der Kontaktposition zurückfährt. Dieses Roboterverhalten ist das, was man typischerweise bei der Manipulation von Objekten gerne hat. Man möchte eben nicht, dass der Roboter seine Position erzwingt, weil das dazu führt, dass das Objekt beschädigt oder sogar zerstört wird.

Dieses Gedankenmodell mit dem Impedanz-Regler verdeutlich eigentlich recht einleuchtend und eindrucksvoll, was passiert wenn der Roboter ausgehend von den Proxy-Inputs als Stellgröße, der Sollposition und der Sollgeschwindigkeit, zu einer dazu korrespondierenden Position fährt, dann im Zuge des Lokalisierens eines bewegbaren Objektes in Kontakt mit dem Objekt kommt, dann dort Kräfte im Kontakt aufbaut und zwar solange bis diese Feder gespannt ist und dann dort, eine konstante Kraft auf das Objekt und dessen Umgebung ausübend, stehenbleibt. Dies ist das Wirkungsprinzip eines Impedanz-Reglers. Ein solcher Impedanz-Reglers ist eine Möglichkeit für einen Regler, der unter der Voraussetzung des Auftretens von Kontaktkräften und der Zur-Verfügung-Stellens von Proxy-Inputs oder mittelbaren Inputs (die Sollpositionen und die Sollgeschwindigkeit für diesen Regler) das System bzw. den Roboter stabilisiert.

### Warum ist das Messmodell für das Schätzproblem erforderlich?

Wenn man versucht, die Position von dem Objekt basierend auf Roboterpositionen und Kontaktkräften, die man irgendwie misst, abzuschätzen, dann ist es auf den ersten Blick gar nicht klar, was sind eigentlich Messungen und was ist Aktuierung im Sinne von maschinell betätigen oder ansteuern.

Man könnte ja zum Beispiel sagen, sag dem Roboter fahr da hin und dann misst er eine Kraft oder ich kann sagen, ich kommandier die Achsen und dann fährt er zu einer Position. Das ist also von der logischen Reihenfolge ist es nicht unbedingt klar, was Aktuierung und was Messung ist. Und es ist tatsächlich relevant, wenn man zum Beispiel Ansätze aus der Literatur betrachtet, die versucht haben, dieses Problem vorher zu lösen.

Was bei diesen bekannten Ansätzen gemacht wird ist Folgendes: Die nehmen die Roboterposition im Endeffekt sowohl als Aktuierung als auch als Messung an und ignorieren die Kräfte. Und dann wird gesagt: Der Roboter soll irgendwo hinfahren und er ist dort hingefahren und man weiß, dass die Objekte und der Roboter sich nicht durchdringen, das heißt das Messmodell ergibt sich ausschließlich über die angenommene Durchdringung oder Nichtdurchdringung. Man weiß weiter, wenn der Roboter im Objekt stecken würde (es also eine Durchdringung gibt), dass das kein plausibler Zustand ist. Man weiß auch, wenn man zusätzlich noch Kräfte betrachtet, dass man dann z.B. sagen kann, wenn man eine Kraft spürt, dann ist man im Kontakt. Das heißt, wenn man eine Hypothese hat, wo das Objekt nicht in Kontakt ist, dann weiß man, dass diese nicht plausibel ist, denn man misst ja einen Kontakt.

Eine solche Herangehensweise hat eindeutige Nachteile.

Der erste Nachteil ist, man hat kein plausibles Bewegungsmodell, wenn man das tut, wenn man quasi von Positionen als Aktuierung ausgeht, weil es kein sinnvolles Modell gibt, wie man diese, möglicherweise springende quasi Position vom Roboter und Objekt mit der Dynamik in Einklang bringt.

Der zweite Nachteil ist, dass man daraus nicht sinnvoll ableiten kann, wie sich das Objekt bewegen sollte.

Was dann gemäß den bekannten Ansätzen typischerweise getan wird, es wird angenommen, dass das Objekt einfach durch den Raum diffundiert, möglicherweise auch in allen sechs Freiheitsgraden, womit es also anfängt zu schweben. Und dann wird versucht, dieses hinterher wieder zu korrigieren und das hat zwei Nachteile.

Erstens werden Effekte wie zum Beispiel, dass das Objekt vom Roboter geschoben wird, nicht physikalisch plausibel abgebildet und zweitens hat man tatsächlich die volle Dimensionalität des Zustandsraums, mit der man sich auseinandersetzen muss. Das Objekt fängt an zu schweben und man muss in allen sechs Freiheitsgraden das Objekt abschätzen, wobei man das eigentlich ja gar nicht will.

Bei dieser Art der Herangehensweise ist das Problem sowohl Teil des Bewegungsmodells als auch Teil Messmodell.

Um das zu umgehen wird bei dem Ausführungsbeispiel gesagt: Der Control-Input ist die Sollposition des Reglers, aber die direkte, von außen nicht modulierte Stellgröße, ist das Drehmoment, das sich aus dem Regler in dem Physiksimulator ergibt. Das sorgt dafür, dass sich bei der Physiksimulation alles physikalisch plausibel bewegt und dann wird hinterher beim Messmodell verglichen, ob die simulierten Achspositionen mit den gemessenen Achspositionen übereinstimmen. Bei diesem Ansatz ist es ausgeschlossen, dass die Objekte irgendwo sein können, sondern sie sind immer garantiert in physikalisch plausiblen Zuständen. Es gibt kein Objekt, das schwebt, es gibt kein Objekt, das sich mit einem anderen Objekt z.B. der Tischplatte durchdringt oder von dem Roboter durchdrungen wird. Das heißt, das Messmodell ist erforderlich, weil das Messmodell so wie es vom Ansatz her betrachtet wird, ist physikalisch nicht plausibel, weil man weiß, wo der Roboter sich befindet. Man weiß auf viele Nachkommastellen genau wo der Roboter ist. Das heißt anzunehmen, dass es da eine Abweichung gäbe, ist eigentlich physikalisch nicht plausibel. Es löst aber einen ganzen Haufen andere Probleme, die da drumherum entstehen können oder entstehen, wenn man andere Ansätze verfolgt.

Es gibt nun wie vorstehend erläutert und beschrienen das Bewegungsmodell und das Systemmodell. Würde man diese beiden Modelle jetzt derart zusammenführen, indem man das Bewegungsmodell in den Physiksimulator simuliert wird, so erhielte man ein deterministisches System. Es besteht einfach aus einem Integrator plus einem Regler, das ist deterministisch. Es ist aus verschiedenen Gründen hilfreich, wenn man so eine probabilistische Zustandsschätzung macht, dass das zu betrachtende System nicht deterministisch ist, man möchte eigentlich, dass es verrauscht ist.

Gemäß dem Ausführungsbeispiel der Erfindung werden Kräfte auf die Objekte einfach künstlich und rein zufällig angebracht, die dann die Objekte so ein bisschen durch die Gegend treiben. Man kann aber an ganz vielen verschiedenen Stellen in dem durch das Systemmodell beschriebenen System ein "Rauschen" anbringen. So z.B. irgendwelche Rauscheingaben im Systemmodell vornehmen. Wichtig ist, dass am Ende das System nicht deterministisch ist, wo und wie man das "Rauschen" erzeugt, ist eigentlich nicht wichtig. Es ist nur wichtig ein verrauschtes System zu haben.

Die Vorwärtsdynamik in dem Bewegungsmodell ergibt sich bei *Wirnshofer et al.* in der bildlichen Darstellung (Fig. 3) aus dem Block "Forward Dynamics", indem man die Gleichung (1) im Kapitel III A) umstellt und dann nach den Beschleunigungen auflöst. Die Beschleunigungen, die hier als "*q̇*^{d}ᵣ" beschrieben sind, sind sowohl die Beschleunigungen vom Roboter als auch vom Objekt und sie hängen von den Drehmomenten oder generalisiert quasi von Kräften *τ* [vgl. Gleichung (1) bei *Wirnshofer* et *al*.] ab, die man an dem System anbringt.

Diese generalisierten Kräfte setzen sich zusammen aus den Teilkräften, die am Roboter anliegen, z.B. sind es bei einer rotatorischen Achse die Drehmomente und anderen Teilkräften, die am Objekt wirken. Da das Objekt als nicht aktuiert angenommen wird, sind die Teilkräfte, die am Objekt wirken, wenn man physikalisch plausibel darüber nachdenkt, gleich Null. Es gibt dort keine Kräfte, denn die Schwerkraft ist schon auf der linken Seite der Gleichung (1) explizit moduliert. Ansonsten wirkt keine Kraft auf dem Objekt. Wenn man jetzt aber Kräfte an dem Objekt anbringt, z.B. zufällige Kräfte *τ*ₒ, dann erzeugt man hier ein verrauschtes Modell. Genau das wird so gemacht [vgl. bei *Wirnshofer et al.* in der bildlichen Darstellung (Fig. 3)].

Die Tatsache, dass das Bewegungsmodell über die Kräfte am Objekt verrauscht gemacht wird, ist eine wichtige Eigenschaft von dem Systemmodell bzw. dem Integrationsmodell, das in (Fig. 3) bei *Wirnshofer et al.* dargestellt ist. haben, Dieses System ist ja per se deterministisch und es muss für die Filterschätzung verrauscht gemacht werden und die Tatsache, dass das über die Kräfte am Objekt erfolgt, hat die sehr schöne Eigenschaft, dass hinterher zwar das System künstlich verrauscht ist, aber so nur physikalisch plausible Zustände erzeugt werden. Wenn an dem Objekt eine zusätzliche Kraft hinzufügt wird, dann wird dieses so beaufschlagte Objekt trotzdem nicht sich selbst durch irgendein anderes Objekt, wie z.B. die Tischplatte etc. hindurchdrücken. Wenn an dem Objekt nach links gezogen wird, dann rutscht es nach links über die Tischplatte, wenn das Objekt nach unten gezogen wird, dann bleibt es trotzdem auf der Tischplatte liegen und wenn an dem Objekt ein bisschen nach oben gezogen wird, dann wird sehr wahrscheinlich die Schwerkraft trotzdem ausreichen, dass das Objekt auf der Tischplatte liegen bleibt. Das heißt, durch die zusätzliche Kraft kann man zwar den Zustand verrauschen, aber man verrauscht ihn nur so, wie typischerweise auch die Ungenauigkeiten in dem Prozess aussehen, nämlich das Objekt schwingt nicht und das Objekt springt auch nicht auf einmal auf die andere Seite, sondern es verschiebt sich vielleicht ein bisschen in der Ebene, aber das war es dann auch. All das passiert dadurch, zustande, dass die generalisierten Kräfte an dem Objekt verrauscht werden. Das ist sehr generisch und es hat sehr schöne numerische Eigenschaften bei der Filterschätzung.

Dem Modell wird eine gemeinsame Dynamik von Roboter und Objekt zugrunde gelegt, aber Roboter und Objekt haben separate Zustände, die man auch separat verrauschen könnte, wenn man das möchte.

Bei der Modellzusammenführung erhält man eine Wahrscheinlichkeitsverteilung, die die Dynamik des Systems, das Bewegungsmodell, abbildet und es gibt eine Wahrscheinlichkeitsverteilung, die das Messmodell abbildet, nämlich die Messungen von den Achspositionen.

Auf der Basis dieser beiden Wahrscheinlichkeitsverteilungen wird jetzt der Bayes-Filter-Algorithmus in dem Bayes-Filter umgesetzt, der die Wahrscheinlichkeitsverteilung über die Objektposition und auch die Wahrscheinlichkeitsverteilung über die Roboterposition schätzt, wobei die Roboterposition im Gegensatz zur Objektposition nicht so richtig interessiert.

Der Bayes-Filter hat in seiner reinen Form die Eigenschaft, dass das man ihn nicht auf einem Computer bzw. Rechner implementieren kann, weil man da kontinuierliche Wahrscheinlichkeitsverteilungen abschätzt. Das heißt, man braucht eine geeignete Approximation, also eine Approximationsfilter oder präziser ausgedrückt einen Approximationsalgorithmus.

Von den möglichen Optionen hierfür wird jetzt vorzugsweise eine Partikelfilter-Repräsentation verwendet [4]. Dabei wird die Wahrscheinlichkeitsverteilung abgebildet entweder durch Hypothesen oder durch Samples aus der Wahrscheinlichkeitsverteilung und man erneuert (updated) Schritt für Schritt diese Menge oder Wolke von Partikeln, die man dabei jeweils erhält.

Der Partikelfilter-Algorithmus ist ein recht einfacher Algorithmus, der auf zwei Komponenten zurückgreift. Dies wird bei *Wirnshofer et al.* in dem Kapitel IV beschrieben.

Der Approximationsalgorithmus und vorzugsweise der Partikelfilter-Algorithmus muss aus dem Bewegungsmodell sampeln können und er muss das Messmodell auswerten können. Sobald die zwei Komponenten fertig sind, hat man einen generischen Zustandsschätzer für was auch immer für ein System man gerade betrachtet.

Mit der Filterschätzung durch den Bayes-Filter-Algorithmus und der Approximation durch den Partikelfilter-Algorithmus soll Schritt für Schritt (durch Iteration) jeweils eine Wahrscheinlichkeitsverteilung abgebildet werden, um schätzen zu können, wo sich das System gerade befindet.

Wenn das Bewegungsmodell hierfür nicht ausreichend verrauscht ist dann tritt ein Effekt ein, der als "particle depletion (Partikelmangel)" bezeichnet wird, gemäß dem alle Partikel am gleichen Punkt enden und damit die Filterschätzung zusammengebrochen ist.

Dieser Effekt, der allgemein für sämtliche Approximationsfilter zu beobachten ist, tritt insbesondere bei der Approximation mit Partikelfilter auf. Der Filter denkt, er ist sich hundert Prozent sicher, dass das System jetzt in einem bestimmten Zustand ist, es aber dort nicht ist und aus diesem Dilemma kommt der Filter nicht mehr heraus. Der Filter wird dann immer auf diesen einen Punkt hängenbleiben. Deshalb braucht der Filter eben dieses Verrauschen, damit die einzelnen Verteilungen wieder diffundieren und man den Raum der möglichen Zustände des Systems wieder erkunden kann.

Mit dem Bayes-Filter und der Partikel-Approximation hat man aktuell eine Wahrscheinlichkeitsverteilung, in welchem Zustand sich das System gerade befindet. Dies wird als der "belief" über den aktuellen Zustand bezeichnet, der mit "xₜ" - in Bezug auf Zeitpunkte wieder mit "ₜ" als Index - bezeichnet wird. Die aktuelle Wahrscheinlichkeitsverteilung ist der "belief" von "xₜ" und er beschreibt, wo das System aktuell gerade ist. Man hat zwei Größen, die man kennt. Man kennt den aktuellen Control-Input, mit dem man das System beaufschlagt hat, das ist das bereits erwähnte "*uₜ*", und dann ist da die aktuelle Messung, die man über das System bekommen hat und die mit "zₜ" bezeichnet wird.

Weiterhin hat man einerseits das Bewegungsmodell und andererseits das Messmodell.

Das Bewegungsmodell gibt an, welche Wahrscheinlichkeit in einem aktuellen Zustand "xₜ" gegeben ist, dass man tatsächlich wusste, wo man vorher war, nämlich in einem Zustand "xₜ₋₁" und den Control-Input. Das Bewegungsmodell liefert einem die Aussage, wenn man da war und man nimmt den Control-Input, dann diffundiert das System irgendwo von der Wahrscheinlichkeitsmasse von da nach dort hin.

Das Messmodell liefert die Aussage, angenommen man war da, welche Messung würde man mit welcher Wahrscheinlichkeit bekommen.

Wenn man z.B. annimmt, dass die Achse auf einer Achsposition mit einem Winkelmaß von 100° war, dann bekommt man, z.B. in Bezug auf die bereits erwähnte Gauß-verteilte Messung über die Achsposition, eine Achsposition, die um dieses 100°-Winkelmaß zentriert ist.

Der Bayes-Filter funktioniert nach einem sehr einfachen Schema. Zunächst wird das Messmodell ausgenutzt, um vorherzusagen zu können, wie sich die Wahrscheinlichkeitsverteilung entwickelt und dann hinterher mit dem Messmodell die Schätzung wieder korrigieren zu können.

Angenommen, man hat den "belief" aus dem letzten Iterationsschritt, das ist der "belief" "xₜ₋₁" und man hat das Messmodell. Da stellt sich jetzt die Frage, wo ist man denn danach und die Wahrscheinlichkeit, dass man danach in einem anderen Zustand ist, ist die Wahrscheinlichkeit, dass man dort von einem anderen Zustand hingegangen ist, multipliziert mit der Wahrscheinlichkeit, dass man in diesem anderen Zustand vorher war. Für den gesamten Zustandsraum erfolgt eine entsprechende Integration.

Anders ausgedrückt: Man ist irgendwo, dann war man vorher woanders und man ist aber dort hingegangen.

Die ist bei *Wirnshofer et al.* in den Gleichungen (4) und (5) von Kapitel III C) abgebildet.

Mit der Messung und der Wahrscheinlichkeit, dass man irgendwo ist, nachdem man eine Messung von diesem Punkt (Zustand) bekommen hat, ist die Wahrscheinlichkeit, dass man auch tatsächlich dort ist, multipliziert mit der Wahrscheinlichkeit, dass man von dort aus gesehen diese Messung bekommen und das Ganze dann noch durch eine Normalisierungskonstante *η* normalisiert, weil die Wahrscheinlichkeitsverteilung muss sich hinterher sich auf Eins integrieren, wird der "belief" aktualisiert (upgedatet). Das ist schon das ganze Prinzip, das dem Bayes-Filter-Algorithmus bzw. dem Bayes-Filter zugrunde liegt.

Fazit: Man war möglicherweise irgendwo und ist möglicherweise irgendwo hingegangen, das ist eine Zustandsübergangswahrscheinlichkeit, die sich aus dem Bewegungsupdate (ein Update des Bewegungsmodells) ergibt und dann wird noch ein Messupdate (ein Update des Messmodells) gemacht, man könnte jetzt irgendwo sein, man muss dann aber auch das gemessen haben, was man gemessen hat und dann weiß man, wie wahrscheinlich es ist, dass man gerade irgendwo ist, das ist eine Wahrscheinlichkeit der Messung.

Der Bayes-Filter-Algorithmus bzw. der Bayes-Filter ist sicherlich nicht die einzige Methode, wie man Zustände schätzt oder Wahrscheinlichkeitsverteilungen ermittelt, aber er dürfte für das vorliegende große, komplexe Schätzungsproblem die einzige sinnvolle Methode sein und er bildet im Prinzip den Ausgangspunkt, sich diesem Problem zu nähern. Um dieses große, komplexe Schätzproblem in den Griff zu kriegen, was schon bei mehrdimensionalen Zustandsräumen im niedrigen zweistelligen Bereich aufgrund der bei normalen Computern und Rechnern zur Verfügung stehenden Rechenkapazität scheitert, ist ohnehin - wie bereits erwähnt - eine geeignete Approximation, wie vorzugsweise durch den Partikelfilter-Algorithmus bzw. den Partikelfilter von Nöten.

Zu den möglichen anderen Optionen, die es in Bezug auf die Approximation zum Bayes-Filter-Algorithmus gibt. Der Bayes-Filter-Algorithmus ist der generischste Algorithmus, der sich so typischerweise vor dem Hintergrund des vorstehend beschriebenen großen, komplexen Schätzproblems nicht mit herkömmlichen Computern/Rechnern implementieren lässt.

Ausgehend von diesem Bayes-Filter-Algorithmus gibt es dann verschiedene Approximationen. Vorstehend genannt wurde z.B. der Partikelfilter, bei dem die Wahrscheinlichkeitsverteilung durch Samples approximiert wird.

Wenn man jedoch ein paar Annahmen über die erhaltenen Wahrscheinlichkeitsverteilungen macht, z.B. dass diese alle Gausverteilt sind und dass die Systemdynamik linear ist, dann landet man bei einem Kalman-Filter.

Wenn man den Zustandsraum diskretisiert und ein diskretes System annimmt, dann landet man bei einem Histogramm-Filter oder so was Ähnlichem. Also es gibt verschiedene Varianten, das hier zu approximieren und es gibt auch Mischformen. So gibt es z.B. Mischformen zwischen Partikelfilter und Kalman-Filter.

Für das vorliegende große, komplexe Schätzproblem kann man sich vielleicht auch noch vorstellen, dass eine Kombination aus Kalman-Filter und Partikelfilter auch noch gehen würde und gegebenenfalls noch ein Extended Kalman-Filter. Wohingegen ein Histogramm-Filter eigentlich nicht wirklich Sinn ergibt. Es gibt zwar die verschiedensten Approximationen, allerdings ist der Partikelfilter die Approximation, die mit den wenigsten Annahmen und den wenigsten Einschränkungen allerdings auch mit den höchsten Rechenaufwand. Und man muss den Partikelfilter iterativ auf die Messungen und Aktionen anwenden, um dann eine Zustandsschätzung oder präziser eine Wahrscheinlichkeitsverteilung zu erhalten, wo sich das Objekt denn gerade befinden könnte, es also lokalisiert ist.

Um nach dem Erhalt der Wahrscheinlichkeitsverteilung aus dieser Verteilung letztlich einen geschätzten Zustand des Objektes und/oder den lokalisierten Ort des Objektes zu bekommen, kann man jetzt verschiedene Sachen machen. Man kann einfach zum Beispiel den Mittelwert der Wahrscheinlichkeitsverteilung bilden und diesen Wert für die Zustandsschätzung nehmen. Man kann alternativ auch den Modus der Wahrscheinlichkeitsverteilung bilden.

Also das ist generell ein Problem von allen Schätzmethoden, die Bayes-Filter-Algorithmus-basiert sind. Wenn man zum Schluss tatsächlich eine konkrete Hypothese haben will, muss man sich überlegen, was man mit der Wahrscheinlichkeitsverteilung macht, die man erhalten hat. Man erhält eine Wahrscheinlichkeitsverteilung über die Objektposition und eben nicht eine Objektposition, denn man wird nie wissen, wo das Objekt ist, wenn man es systematisch korrekt betrachtet.

Anhand dieser Wahrscheinlichkeitsverteilung kann man sich dann überlegen, wie eine konkrete Hypothese aussehen könnte, die dann verwendet wird, oder was auch immer man mit der erhaltenen Wahrscheinlichkeitsverteilung macht.

### Was ist jetzt eine Hypothese?

Hierzu werden ausgehend von den Ausführungen bei *Wirnshofer et al.* in dem Kapitel IV die dort enthaltenen (Fig. 4) und (Fig. 5) näher betrachtet. So zeigt die (Fig. 4) bei *Wirnshofer et al.* mit den dargestellten Schritten I...IV eine zeitliche Abfolge, wenn der Bayes-Filter-Algorithmus und zur Approximation mit dem Partikelfilter-Algorithmus iterativ angewendet wird. Diese "kleinen Boxen", die dort orange-farbig dargestellt sind, sind Hypothesen, wo denn sich das Objekt (wie es z.B. in (Fig. 1) und (Fig. 6) bei *Wirnshofer et al.* dargestellt ist) in einer Umgebung (wie es z.B. in (Fig. 6) bei *Wirnshofer et al.* in Form der grauen Tischplatte mit einem grauen Kasten dargestellt ist) gerade befinden könnte.

In (Fig. 4) wird in dieser Umgebung, die in (Fig. 4) grau gezeichnet ist, der Roboter mit einem Würfel als Objekt dargestellt (grüne Farbe). Initial ist bekannt, wenn auch nur sehr grob, wo der Würfel bzw. das Objekt ist. In (Fig. 4 im Schritt I) und in (Fig. 5 im linken Bild) ist jeweils eine solche Wolke aus Hypothesen bzw. "kleinen Boxen", also Partikeln gesampelt, die nicht alle physikalisch plausibel sind. Manche von den "kleinen Boxen" liegen auf der Tischplatte und dem Kasten, andere schweben in der Luft, beides muss nicht unbedingt physikalisch plausibel sein. Initial können die vollkommen unplausibel sein.

Das ist der Initialzustand, die initiale Verteilung oder der initiale "Believe" über einen beliebigen Anfangszustand des Systems. Man muss mit einer initialen Verteilung anfangen. Man muss irgendeine Idee haben, wie das System initial aussehen könnte.

Man geht immer von Zustandsverteilung aus. Das was man in (Fig. 4) in den Schritten I...IV sieht, sind nicht vier Schritte Bayes-Filter-Algorithmus mit dem Partikelfilter-Algorithmus zur Approximation, sondern der Bayes-Filter mit dem Partikelfilter wird vorzugsweise in der Regel mit 200 Hertz in einer Schleife ausgewertet. Dies wird ein paar Sekunden dauern und in dieser Zeit hat man den Filter ein paar hundert Mal angewendet, um dieses Ergebnis zu erreichen.

Der Initialzustand muss nicht immer so aussehen wie er jetzt hier in Schritt I von (Fig. 4) bei *Wirnshofer et al.* aussieht, das ist nur ein Beispiel, wie der Initialzustand aussehen könnte. Alternativ kann derjenige (z.B. ein Nutzer), der eine Konfigurationsanordnung wie bei *Wirnshofer et al.* implementieren möchte, sagen, der Roboter befindet sich irgendwo über der Tischplatte und lässt an dieser Stelle jetzt mal so eine Wolke von ca.1000 Hypothesen erzeugen und von da an übernimmt dann der Filter und macht das Update. Aber man muss irgendwie auf einen Initialzustand spezifizieren. Der muss da sein. Ewas präziser: Nicht der Initialzustand, sondern eine Initialverteilung über Zustände muss es geben.

Die Initialverteilung über die Zustände kann derjenige einfach spezifizieren wie er mag. Dafür wird noch gar kein Filter benötigt. Also die bei *Wirnshofer et al.* im Schritt I von (Fig. 4) gewählte Initialverteilung ist physikalisch nicht plausibel, das Objekt ist nicht einfach in der Luft, das macht keinen Sinn, aber es können durchaus implausible Zustände spezifiziert werden und solange die ungefähr im Rahmen des Möglichen sind, schwingt sich das Ganze dann auf physikalisch plausible Hypothesen.

Mit irgendwas muss man anfangen. Man startet mit einer Initialverteilung und das Ergebnis von einer Anwendung des Filters ist wieder eine Verteilung. Das heißt, danach arbeitet die Konfigurationsanordnung auf ihren eigenen Ergebnissen weiter.

Wird jetzt der Bayes-Filter-Algorithmus mit dem Partikelfilter-Algorithmus zur Approximation das erste Mal angewendet, dann passiert das, wenn die Physiksimulation alle "kleinen Boxen" nochmal umfallen lässt, was in (Fig. 5 im rechten Bild) dargestellt ist. Die "kleinen Boxen" landen entweder irgendwie auf der Tischplatte oder auf dem Kasten und zwar mit irgendeiner Orientierung, die physikalisch plausibel ist. Also im Vergleich zu (Fig. 5 linkes Bild) bleibt keine "kleine Box", kein Würfel bleibt auf der Kante stehen, sondern sie/er fällt auf eine Seite. Was man auch noch ganz gut sieht in (Fig. 5 im rechten Bild), ist folgendes: Es gibt nur noch wenige quasi diskrete Z-Positionen, wo sich das Objekt befinden kann, weil das bleibt halt auf einer Seite liegen und das gleiche ergibt sich auch für die Orientierung. Das ist so ein bisschen weniger durchsichtig diese Darstellung aber wir landen auf einer von den Eckseiten des Würfels.

### Was ist passiert?

Das System hat sich bei der erstmaligen Anwendung des Bayes-Filter-Algorithmus mit dem Partikelfilter-Algorithmus basierend auf der Physiksimulation stabilisiert. So wie z.B. in (Fig. 4 im Schritt I) dargestellt.

Jetzt wird gemäß (Fig. 4 im Schritt II) bei einer Implementierung der erfindungsgemäßen technischen Lehre mit einem Roboter aufgrund der - durch das "q^{d}ᵣ" *bei Wirnshofer et al.* in der bildlichen Darstellung (Fig. 3) gegebenen - Sollposition einmal entlang der Solltrajektorie (lila Bahn in (Fig. 4 im Schritt II) gefahren und der Roboter folgt natürlich dieser Bahn und schmeißt dabei, wenn er das Objekt trifft, das Objekt nach unten oder schiebt es zur Seite und, wenn er das Objekt nicht trifft, bleibt es an Ort und Stelle liegen.

Für die Implementierung weiß man, dass es eine Vielzahl von "kleinen Boxen" bzw. Hypothesen gibt, z.B. ca. 1000 gemäß der bei *Wirnshofer et al.* durchgeführten Implementierung, wo das System gerade sein könnte. In jeder Hypothese bzw. "kleinen Box" dieser Hypothesen bzw. "kleinen Boxen" versucht der Roboter, dem Physiksimulator dieser Bahn zu folgen und reagiert wie zuvor beschrieben. Das heißt, jede dieser "kleinen Boxen" liegt in ihrem eigenen Physiksimulator, der verrauscht ist, und reagiert entsprechend auf das, was der Roboter da tut.

In einem dritten Schritt, (Fig. 4 im Schritt III), wird mit dem Roboter wieder aufgrund der - durch das "q^{d}ᵣ" *bei Wirnshofer et al.* in der bildlichen Darstellung (Fig. 3) gegebenen - Sollposition entlang der Solltrajektorie (lila Bahn in (Fig. 4 im Schritt III) in Richtung der Kante auf der Tischplatte gefahren und der Roboter folgt natürlich wieder dieser Bahn. Es wird also mit dem Roboter gegen diese Kante gefahren. Jetzt können zwei Sachen passieren. Wenn das Objekt im Physiksimulator noch da oben auf dem Kasten läge, würde der Roboter gegen die Kante fahren, wenn das Objekt aber schon unten - wie dargestellt - auf der Tischplatte liegt, dann fährt der Roboter gegen das Objekt und bleibt am Objekt hängen. An dieser Stelle ist das erste Mal, dass das Messmodell so richtig zum Tragen kommt, weil hier gibt es eine tatsächliche starke Abweichung zwischen den verschiedenen Hypothesen bzw. "kleinen Boxen", wo dann der Roboter gerade sein kann und dementsprechend liefert das Messmodell unterschiedliche Wahrscheinlichkeitswerte, wie wahrscheinlich die Messung ist, die man gerade aktuell bekommt. Und der Roboter ist tatsächlich hier hängengeblieben. Das heißt, aufgrund des Vergleichs, bleiben nur noch Hypothesen bzw. "kleine Boxen" übrig, wo der Roboter auch hängengeblieben ist. Das sind solche Hypothesen bzw. "kleine Boxen", wo das Objekt auf der Bodenplatte liegen bleibt. Gemäß (Fig. 4 im Schritt IV) hat anscheinend nur eine Hypothese bzw. eine "kleine Box" "überlebt", während alle anderen Hypothesen bzw. "kleine Boxen", die noch oben auf dem Kasten liegen, verschwinden, weil die aufgrund des Messmodells nicht physikalisch plausibel sind.

In dem vierten (letzten) Schritt, (Fig. 4 im Schritt IV), wird mit dem Roboter wieder aufgrund der - durch das "q^{d}ᵣ" *bei Wirnshofer et al.* in der bildlichen Darstellung (Fig. 3) gegebenen - Sollposition entlang der Solltrajektorie (lila Bahn in (Fig. 4 im Schritt IV) in Richtung des Kastens auf der Tischplatte gefahren und der Roboter folgt natürlich erneut dieser Bahn. Hier haben sich die Hypothesen darüber, wo sich das Objekt gerade befinden könnte, quasi eingeschwungen quasi auf diese letzte Hypothese minus der Symmetrien. So kann man natürlich nicht unterscheiden, ob das Objekt jetzt um 180° gedreht ist oder nicht. Das bekommt bei der Anwendung der erfindungsgemäßen Lehre nicht heraus, aber man hat wenigstens mal die Position sehr gut geschätzt und die Rotation auf wenige Möglichkeiten begrenzt. Auf diese Art und Weise würde die Implementierung der technischen Lehre der Erfindung auch in der Realität funktionieren.

Die bei dieser Implementierung betrachtete Sollposition ist extern gegeben - also von außen vorgegeben, sie entwickelt sich immer gleich und ist für alle Partikel, Hypothesen, "kleine Boxen" immer die gleiche. Die ist von außen vorgegeben. Das ist die Aktion, mit der das Integrationsmodell bzw. dass Systemmodell beaufschlagt wird [*vgl. Wirnshofer et al.* (Fig. 3)]. Dieses Integrationsmodell bzw. Systemmodell wird Teil von dem Bewegungsmodell und das Bewegungsmodell wird Teil von Gleichung (4) *bei Wirnshofer et al.,* nämlich der Prädiktion des Bayes-Filter-Algorithmus bzw. Bayes-Filters. Dies ist ganz gut *bei Wirnshofer et al.* in dem Schritt II von (Fig. 4.) zu sehen. Da bewegt sich der Roboter in Simulation und die Objekte und der Roboter bewegen sich so wie das Bewegungsmodell es vorhersagt. Wenn der Roboter irgendwo gegen das Objekt fährt, fällt es vom Kasten herunter auf die Tischplatte oder der Roboter schiebt es zur Seite, wenn er nicht gegen das Objekt fährt, bleibt es da, wo es ist. In jedem Fall folgt der Roboter der Sollgröße oder er versucht es zumindest, ihr zu folgen und zwar aufgrund des Reglers in dem Integrationsmodell bzw. Systemmodell.

Gleiches gilt für den Schritt III von (Fig. 4) *bei Wirnshofer et al.* Auch hier spielt natürlich wieder das Bewegungsmodell mit rein, sprich alle "kleine Boxen" drücken sich gegen die Kante auf der Tischplatte und falls keine "kleine Boxen" dort wäre - hypothetisch Annahme -, würde der Roboter selbst gegen die Kante fahren und das wird dann wiederum in dem Messmodell genutzt. Das passiert aufgrund von Gleichung (5) *bei Wirnshofer et al*., wo die Messungen der tatsächlichen Achspositionen mit den Messungen der simulierten Achspositionen vergleichen werden. Und aufgrund dieses Messvergleichs verschwinden dann ganz viele von den Hypothesen bzw. den "kleinen Boxen", weil sie nicht mehr physikalisch plausibel sind.

### Warum ist ein Kontakt zwischen Roboter und Objekt erforderlich?

Mal angenommen der Roboter würde einfach stehen bleiben und nie mit dem Objekt in Kontakt kommen, dann würde trotzdem die implementierte Partikelfilter-Approximation des Bayes-Filter-Algorithmus die Menge möglicher Objektpositionen auf physikalisch plausible Hypothesen reduzieren. Die werden dann massiv gestreut, das Objekt ist dann verschmiert über die ganze Tischplatte, aber es ist immer auf der Tischplatte. Das ist zwar noch nicht das, was man eigentlich will, denn die Objektposition ist noch nicht lokalisiert, aber man hat einen ganzen Haufen von Konfigurationen, wo man sicher weiß, dass das Objekt dort nicht ist. Und das ist was, was erst mal hilfreich ist, aber noch nicht das, was man eigentlich haben will. Also wenn man wirklich wissen will wo das Objekt ist, dann muss man auch mit einem Roboter das Objekt hinterher berühren [vgl. *bei Wirnshofer et al.* die bildlichen Darstellungen (Fig. 1, 4 und 5)].

### Die Bedeutung der Eingangsgrößen für den betrachteten Schätzungskomplex und weshalb?

Aufgrund der vorstehenden Ausführungen liegt ein System vor, von dem man die Geometrie und auch die Dynamik im Kern kennt und bei der Schätzung möchte, dass der Zustandsraum nicht vollständig explodiert im Sinne von, dass zu viele Dimensionen zu betrachten sind.

Wenn man quasi nur die Bewegung des Objektes betrachtet und die Bewegung des Roboters außer Acht lässt und stattdessen die Bewegung einfach als gegeben, weil quasi messbar, annimmt, dann hat man das Problem, dass man physikalisch unplausible Kontakte zwischen Roboter und Objekt bekommt. Man muss dann den vollen sechs Freiheitsgradraum von der Objektpose betrachten, der dann hinterher basierend auf der Kontaktsituation wieder verworfen werde muss. Das, sechs Dimensionen für die Schätzung mit dem Bayes-Filter inklusive der Partikelfilter-Approximation, ist zu viel.

Das heißt, wenn nur auf Positionen gerechnet wird, dann funktioniert das Ganze nicht. Die Alternative ist, man nimmt die Roboterdynamik mit in das Ganze hinein und rechnet dann mit den Drehmomenten. Dadurch, dass das Drehmoment ein Input des Systems ist, verhält sich dieses physikalisch. Das hat den Vorteil, dass die Dynamik von dem Objekt wunderbar physikalisch plausibel wird, das Objekt hat kein Z-Komponente mehr fällt in dem Zustandsraum nach unten, es wird vom Roboter geschoben, bleibt dann aufgrund der Reibung wieder stehen. Der Zustandsraum des Objekts kollabiert im Endeffekt auf drei Zustände, nämlich die XY-Position und die Rotation um die Z-Achse. Im Endeffekt sind es quasi drei Dimensionen, auf die das System kollabiert.

Der Nachteil ist, dass, wenn man das macht, der Zustandsraum vom Roboter komplett explodiert. So muss man dann sowohl die Positionen als auch die Geschwindigkeiten des Roboters berücksichtigen. Bei einem siebenachsigen Roboter hat man dann 14 Freiheitsgrade, die zusätzlich betrachtet werden müssen. Und das ist auch zu viel.

Um das alles in den Griff zu kriegen, wird Folgendes gemacht. Der Roboter wird zwar auf Positionsebene kommandiert, aber dazwischengeschaltet ist der Regler, der aus diesen Positionsgrößen Drehmomente erzeugt und zwar basierend auf einer angenommenen Roboterposition, die von dem Physiksimulator geliefert wird. Und damit ist eine Situation entstanden, wo sich sowohl der Roboter als auch das Objekt physikalisch plausibel bewegen, weil zwar eine Physiksimulation verwendet wird, aber der Roboter nicht wild durch die Gegend driftet, weil der Regler auch in Simulationen stabilisiert gegenüber der Sollgröße ist. Und das sorgt dafür, dass wir die Vorteile von beiden Ansätzen, der positions- und drehmomentbasieren Betrachtung, bekommen, ohne die Nachteile von einem der beiden Ansätze zu haben.

Für die Umsetzung des Ausführungsbeispiel der Erfindung bräuchte man im Prinzip fünf Dinge (Punkte). Das Erste ist ein Modell von einem Roboter bzw. Manipulator und einem Objekt. Das Zweite ist einen Physiksimulator. Das Dritte ist eine tatsächliche Implementierung von einem stabilen Regler. Das Vierte ist eine Initialverteilung. Und das Fünfte ist ein Modell von dem Rauschen, das wir auf das Objekt anwenden.

Gemäß dem Dokument *Wirnshofer et al.* in Kapitel V wird für die Implementierung als erstes Ding (erster Punkt) ein Modell angenommen, wie es in (Fig. 4), in (Fig. 5) und in (Fig. 6) *bei Wirnshofer et al.* dargestellt ist. Diese Darstellungen hängen alle zusammen, so repräsentiert der grüne Würfel (Box) die tatsächliche Objektposition, die das System natürlich nicht kennt, und die orange-farbigen Würfel (Boxen) Boxen sind alle hypothetische Objektpositionen. Zu diesem Modell gehören all die Sachen, wie Geometrie, Massen und Kinematik von dem Roboter, dem Würfel und natürlich der Umgebung, wie z.B. der Tischplatte.

Als zweites Ding (zweiter Punkt) wird ein MuJoCo-Simulator als Physiksimulator verwendet.

Als drittes Ding (dritter Punkt) wird die bei *Wirnshofer et al.* in (Fig. 5) in dem linken Bild verwendete Initialverteilung von dem Systemzustand herangezogen. Bei dieser Initialverteilung wird eine willkürliche, uniforme Verteilung von Orientierungen und eine Gauß-Verteilung von Translationen, um einen Mittelpunkt am Objekt angenommen. Das sieht man in (Fig. 5) auf der linken Seite. Es sind einfach gaußverteilte Positionen und vollkommen uniform verteilte Rotationen.

Als viertes Ding (vierter Punkt) wird als stabiler Regler ein Kuka-Robotern verwendet, in dem von Haus aus schon Impedanz-Regler auf Achsebene vorhanden sind.

Als fünftes Ding (fünfter Punkt) wird für das Rauschen das bei *Wirnshofer et al.* in Kapitel IV B) beschriebene "Motion zurückgegriffen. Dabei werden am Schwerpunkt des Objekts zufällig angebrachte, normalverteilte Kräfte angenommen.

Damit ist der Ansatz zur probabilistischen Zustandsschätzung oder Bestimmung einer Wahrscheinlichkeitsverteilung im Rahmen des Ausführungsbeispiels der Erfindung erläutert.

### Referenzen:

[1] D. J. Duff, J. Wyatt, and R. Stolkin, "Motion estimation using physical simulation," in 2010 IEEE International Conference on Robotics and Automation, May 2010, pp. 1511-1517.
[2] K. Lowrey, J. Dao, and E. Todorov, "Real-time state estimation with whole-body multi contact dynamics: A modified ukf approach," in 2016 IEEE-RAS 16th International Conference on Humanoid Robots, Nov 2016, pp. 1225-1232.
[3] K. Nottensteiner, M. Sagardia, A. Stemmer, and C. Borst, "Narrow passage sampling in the observation of robotic assembly tasks," in 2016 IEEE International Conference on Robotics and Automation (ICRA), May 2016, pp. 130-137.
[4] https://en.wikipedia.org/wiki/Particle_filter in the version of May 10, 2019

## Patentansprüche

1. Verfahren zum kontaktbasierten Lokalisieren von bei der Manipulation durch Roboter bewegbaren Objekten, bei dem für einen mit der Objektlokalisierung einhergehenden Zustand eines durch mindestens einen stellgrößengeregelten Roboter (ROB), ein für den Roboter (ROB) bei der Objektmanipulation bewegbares Objekt (OBJ) und eine die Objektmanipulation ermöglichende Roboter-Objekt-Umgebung (ROU) als Systemkomponenten gebildeten Systems (SYS) und im Zuge einer Systemzustandsschätzung
eine das Objekt (OBJ) lokalisierende Wahrscheinlichkeitsverteilung mittels einer iterativ-rekursiven Anwendung eines Bayes-Filter-Algorithmus (BFA) ermittelt wird, wobei für die iterativ-rekursive Anwendung des Algorithmus
- in einem nicht-deterministischen Bewegungsmodell (BWM) zur Systemsimulation aus modellierten Übergängen von Zuständen des Systems gewonnene Zustandsübergangswahrscheinlichkeiten
und
in einem Messmodell (MSM) zur Systemsimulation aus modellierten Plausibilitätsprüfungen der im Bewegungsmodell (BWM) modellierten Systemzustandsübergänge gewonnene Messungswahrscheinlichkeiten
multiplikativ verknüpft werden und
- am Anfang eine Initial-Wahrscheinlichkeitsverteilung benutzt wird,
**dadurch gekennzeichnet, dass**
**a**) bei der iterativ-rekursiven Ermittlung der Wahrscheinlichkeitsverteilung ein Approximationsalgorithmus (APA) benutzt wird,
**b**) ein die Physik des Systems (SYS) in Bezug auf Kräfte und Dynamik und die hieraus resultierenden physikalischen Zusammenhänge der Systemkomponenten vollständig inkludierender Physiksimulator (PHS) zur Systemzustandssimulation und ein den Physiksimulator bei rückgekoppeltem Simulationssystemzustand steuernder Regler (RGL), der aufgrund einer ihm zugeführten Stellgröße (SGR) den Physiksimulator (PHS) so steuert, dass bei der Systemzustandssimulation der Roboter (ROB) sich nachgiebig gegenüber der Roboter-Objekt-Umgebung (ROU) verhält, als ein deterministisches Simulationssystem (SSY) in das Bewegungsmodell (BWM) einbezogen wird,
**c**) der Physiksimulator (PHS) durch das Beaufschlagen mit einer zufälligen Kraft und/oder Dynamik verrauscht wird, so dass infolge davon sowohl das Simulationssystem (SSY) als auch für die Modellierung der Systemzustandsübergänge das Bewegungsmodell (BWM) nicht-deterministisch werden,
**d**) für die Plausibilitätsprüfungen in dem Messmodell (MSM) achsspezifische, insbesondere die Achskinematik betreffende, Messungen an dem Roboter (ROB) vorgenommen und deren Messergebnisse (MSE) benutzt werden.

2. Verfahren nach Anspruch 1, **dadurch gekennzeichnet, dass**
ein Partikelfilteralgorithmus (PFA) zur Approximation des Bayes-Filter-Algorithmus (BFA) bei der iterativ-rekursiven Ermittlung der Wahrscheinlichkeitsverteilung benutzt wird.

3. Verfahren nach Anspruch 1 oder 2, **dadurch gekennzeichnet, dass**
die Stellgröße (SGR) aus einer Sollposition, Sollgeschwindigkeit, und/oder einer Sollbeschleunigung gebildet wird.

4. Verfahren nach einem der Ansprüche 1 bis 3, **dadurch gekennzeichnet, dass**
eine Impedanz-Regelung (IPR) zur nachgiebigen Regelung des Reglers (RGL) benutzt wird.

5. Verfahren nach einem der Ansprüche 1 bis 4, **dadurch gekennzeichnet, dass**
Achsposition, Achsgeschwindigkeit, Achsbeschleunigung und/oder Achsmoment des Roboters (ROB) für die Plausibilitätsprüfungen gemessen werden.

6. Computer-Programm-Produkt (CPP) zum kontaktbasierten Lokalisieren von bei der Manipulation durch Roboter bewegbaren Objekten, mit einem nicht-flüchtigen, lesbaren Speicher (SP), in dem prozessorlesbare Steuerprogrammbefehle eines die Objektlokalisierung durchführenden Programm-Moduls (PGM) gespeichert sind, und ein mit dem Speicher (SP) verbundener Prozessor (PZ), der die Steuerprogrammbefehle des Programm-Moduls (PGM) zur Objektlokalisierung ausführt und dabei für einen mit der Objektlokalisierung einhergehenden Zustand eines durch mindestens einen stellgrößengeregelten Roboter (ROB), ein für den Roboter (ROB) bei der Objektmanipulation bewegbares Objekt (OBJ) und eine die Objektmanipulation ermöglichende Roboter-Objekt-Umgebung (ROU) als Systemkomponenten gebildeten Systems (SYS) und im Zuge einer Systemzustandsschätzung
eine das Objekt (OBJ) lokalisierende Wahrscheinlichkeitsverteilung mittels einer iterativ-rekursiven Anwendung eines in dem Programm Modul (PGM) enthaltenen und umgesetzten Bayes-Filter-Algorithmus (BFA) ermittelt, wobei für die iterativ-rekursive Anwendung des Algorithmus
- gemäß einem nicht-deterministischen Bewegungsmodell (BWM) zur Systemsimulation aus modellierten Übergängen von Zuständen des Systems gewonnene Zustandsübergangswahrscheinlichkeiten und
gemäß einem Messmodell (MSM) zur Systemsimulation aus modellierten Plausibilitätsprüfungen der gemäß dem Bewegungsmodell (BHW) modellierten Systemzustandsübergänge gewonnene Messungswahrscheinlichkeiten
multiplikativ verknüpft werden und
- am Anfang eine Initial-Wahrscheinlichkeitsverteilung benutzt wird,
**dadurch gekennzeichnet, dass**
**a**) in dem Programm-Modul (PGM) ein Approximationsalgorithmus (APA) enthalten und umgesetzt ist, der bei der iterativ-rekursiven Ermittlung der Wahrscheinlichkeitsverteilung, wenn Prozessor (PZ) hierzu die Steuerprogrammbefehle des Programm-Moduls (PGM) ausführt, benutzt wird,
**b**) das Programm-Modul (PGM) zur Objektlokalisierung derart beschaffen ist, dass
**b1**) ein die Physik des Systems (SYS) in Bezug auf Kräfte und Dynamik und die hieraus resultierenden physikalischen Zusammenhänge der Systemkomponenten vollständig inkludierender Physiksimulator (PHS) zur Systemzustandssimulation und ein den Physiksimulator bei rückgekoppeltem Simulationssystemzustand steuernder Regler (RGL), der aufgrund einer ihm zugeführten Stellgröße (SGR) den Physiksimulator (PHS) so steuert, dass bei der Systemzustandssimulation der Roboter (ROB) sich nachgiebig gegenüber der Roboter-Objekt-Umgebung (ROU) verhält, als ein deterministisches Simulationssystem (SSY) in das Bewegungsmodell (BWM) einbezogen wird,
**b2**) der Physiksimulator (PHS) durch das Beaufschlagen mit einer zufälligen Kraft und/oder Dynamik verrauscht wird, so dass infolge davon sowohl das Simulationssystem (SSY) als auch für die Modellierung der Systemzustandsübergänge das Bewegungsmodell (BWM) nicht-deterministisch werden,
**c**) der Prozessor (PZ) zum Ausführen der Steuerprogrammbefehle des Programm-Moduls (PGM) derart ausgebildet ist, dass Messergebnisse (MSE) von an dem Roboter (ROB) gemäß dem Messmodell (MSM) vorgenommenen achsspezifischen, insbesondere die Achskinematik betreffenden, Messungen für die Plausibilitätsprüfungen bei der iterativ-rekursiven Anwendung des Bayes-Filter-Algorithmus (BFA) berücksichtigt werden.

7. Computer-Programm-Produkt (CPP) nach Anspruch 6, **dadurch gekennzeichnet, dass**
das Programm-Modul (PGM) zur Objektlokalisierung derart beschaffen ist, dass
ein Partikelfilteralgorithmus (PFA) zur Approximation des Bayes-Filter-Algorithmus (BFA) bei der iterativ-rekursiven Ermittlung der Wahrscheinlichkeitsverteilung benutzt wird.

8. Computer-Programm-Produkt (CPP) nach Anspruch 6 oder 7, **dadurch gekennzeichnet, dass**
die Stellgröße (SGR) aus einer Sollposition, Sollgeschwindigkeit, und/oder einer Sollbeschleunigung gebildet ist.

9. Computer-Programm-Produkt (CPP) nach einem der Ansprüche 6 bis 8, **dadurch gekennzeichnet, dass** das Programm-Modul (PGM) zur Objektlokalisierung derart beschaffen ist, dass
eine Impedanz-Regelung (IPR) zur nachgiebigen Regelung des Reglers (RGL) benutzt wird.

10. Computer-Programm-Produkt (CPP) nach einem der Ansprüche 6 bis 9, **dadurch gekennzeichnet, dass** die Messergebnisse (MSE) für die Plausibilitätsprüfungen Ergebnisse aus Messungen von Achsposition, Achsgeschwindigkeit, Achsbeschleunigung und/oder Achsmoment des Roboters (ROB) sind.

11. Robotersteuerung (RST) zum kontaktbasierten Lokalisieren von bei der Manipulation durch Roboter bewegbaren Objekten, **gekennzeichnet durch**
ein Computer-Programm-Produkt (CPP) nach einem der Ansprüche 6 bis 10 zur Durchführung des Verfahrens nach einem der Ansprüche 1 bis 5.

12. Roboter (ROB) mit einer Robotersteuerung (RST) nach Anspruch 11.
